# EUROPEAN PATENT APPLICATION

(11) **EP 2 894 052 A1**
(43) Date of publication of application: **15.07.2015**
(21) Application number: 14150929.9
(22) Date of filing: 13.01.2014
(51) Int. Cl.: B60D 1/167

(54) **Front wheel module**

(71) Applicant: Van Den Berg, Adrianus Johannes, 6931 XD Westervoort (NL)
(72) Inventor: Van Den Berg, Adrianus Johannes, 6931 XD Westervoort (NL)
(74) Representative: De Vries & Metman

(57) **Abstract**

Front wheel module (1) comprising:
- a swing bearing (2) with two concentric bearing rings (3, 4),
- a wheel suspension (8),
- at least one wheel (6, 7) rotatably suspended to the wheel suspension,
- and a drawbar (15).

One of the two bearing rings is rigidly connected to the wheel suspension and to the drawbar. The other bearing ring comprises a couplings for connection to a trailer chassis. In plan view the centers of the one or more wheels (6, 7) are positioned within the inner circumference of the swing bearing.

## Description

The present invention relates to a front wheel module, for instance for a trailer or caravan.

Front wheel suspensions of trailers are typically robustly constructed to allow effective transfer of weight and impact loads. If one or two centered front wheels are used, the front wheel suspension comprises a fork linked to the chassis at a distance above the wheel. A suitable spatial arrangement of such front wheel suspensions requires positioning below an elevated part of the trailer chassis.

EP 2 335 952 A1 discloses a drawbar for a trailer with a wheel and two swing bearings. The wheel suspension is connected to a drawbar frame by means of first swing bearing rotating around a first standing axle. The drawbar frame in turn is connected to the second swing bearing, which rotates around a second standing axle. The double swing bearing arrangement serves to provide increased maneuverability, particularly when driving in reverse.

It is an object of the invention to provide a compact front wheel module effectively transferring loads from the wheel to the chassis of the trailer.

According to the invention this object is achieved by a front wheel module comprising:
- a swing bearing with two concentric bearing rings;
- a wheel suspension;
- at least one wheel rotatably suspended to the wheel suspension;
- and a drawbar.

One of the two bearing rings is rigidly connected to the wheel suspension and to the drawbar, while the other bearing ring comprises one or more couplings for connection to a trailer chassis. In plan view the wheel centers are positioned within the inner circumference of the swing bearing.

Accordingly, the drawbar is rigidly connected to the same bearing ring of the swing bearing as the wheel suspension, so the drawbar and the wheel suspension cannot be rotated relative to each other or relative to the bearing ring to which they are connected. Such a front wheel module having the one or more wheels centered within the circumference of the swing bearing can be made very compact. The module can be made with a limited height with reduced loads concentration where loads are transferred from the wheel(s) to the chassis.

The inner or the outer bearing ring is rigidly connected to the wheel suspension and to the drawbar. This means the drawbar rotates with the connected bearing ring. The drawbar can however be hingeable relative to the bearing ring, e.g., about a horizontal axis, or it can be fixed relative to the bearing ring to which it is connected. The drawbar can be connected directly to the bearing ring, or via the wheel suspension or via any other part.

In a specific embodiment, the concentric bearing rings include an inner bearing ring connected to the wheel suspension, and an outer bearing ring connected or connectable to a trailer chassis. Alternatively, the outer bearing ring can be connected to the wheel suspension, while the inner bearing ring is connected or connectable to a trailer chassis.

The front wheel module can or instance have a single wheel or two or more wheels, jointly spanning a width which, in plan view, is less than the diameter of the inner circumference of the slew bearing. Preferably the one or more wheels are symmetrically arranged within the swing bearing. The module can have a single axle or separate axles for each wheel.

The height of the slew bearing can for example be between the height of the wheel center axis and the wheel tops. Optionally, the top of the one or more wheels may project above the top side of the swing bearings.

In a specific embodiment the wheel axis may cross the vertical center axis of the swing bearing in plan view. Alternatively, the wheel axis can be offset relative to the center of the swing bearing, e.g., at a distance from the swing bearing center, away from the drawbar, is the distance between the wheel axis and the drawbar is slightly larger than the distance between the swing bearing center and the drawbar.

The wheel suspension can for example comprise a support frame bridging two opposite sides of one of the bearing rings at a distance above the wheel axis. The support frame can for example extend in a direction substantially perpendicular to the wheel axis while it spaces two wheels in a symmetrical arrangement.

The support frame may for example have a mid-section offset at a distance above the level of the swing bearing. This makes it for instance possible to position one or more shock absorbers between the wheel axle and the mid-section of the support frame.

The invention also relates to a front wheel module comprising a swing bearing, a wheel suspension, one or more wheels rotatably suspended to the wheel suspension, and a mover for each of the one or more wheels, the movers being movable between a rest position and a driving position where it engages the associated wheel. In a particular embodiment, the module comprises two wheels, both provided with a mover, the movers being independently controllable by a control unit, e.g. by a remote control unit.

In a further aspect, the invention relates to a front wheel module comprising a swing bearing, a wheel suspension connected to a bearing ring of the swing bearing, the wheel suspension comprising a swing axle supporting two or more wheels such as to enable swing movement about a horizontal axis orthogonal to the rotational axis of the wheels. Such a swing axle can for example comprise a wheel axle and a swing bushing receiving a fixed support cylinder in a manner allowing said swing movement about the fixed support cylinder. Other types of swing axles can also be used. The use of a swing axle helps to balance load distribution over the wheels of the front wheel module, particularly if the tires have different tire pressures or if one of the wheels passes a pothole or similar unevenness of the road deck.

Optionally, the front wheel module may comprise one or more dampers for damping swing movement by the swing axle. Alternatively, the module does not comprise a damper for damping the swing movement.

The invention also relates to a trailer, such as a caravan or a boat trailer, comprising a front wheel module as disclosed herein. With such a front wheel module a caravan can be obtained with four or more wheels. Rear wheels can be positioned close to the rear end. A caravan with a front wheel module as disclosed and a pair of rear wheels shows improved stability and a good maneuverability.

The invention will be further explained with reference to the drawings.
- Figure 1:: shows in perspective view an exemplary embodiment of a wheel module according to the present invention;
- Figure 2:: shows the front wheel module of Figure 1 in plan view;
- Figure 3:: shows the front wheel module of Figure 1 in side view;
- Figure 4:: shows the front wheel module of Figure 1 in cross section;
- Figure 5:: shows in top view a second embodiment of a front wheel module according to the invention;
- Figure 6:: shows the front wheel module of Figure 5 in side view;
- Figure 7:: shows the lower side of the front wheel module of Figure 5 in perspective view with one wheel broken away;
- Figure 8:: shows the lower side of the front wheel module of Figure 5 in detail;
- Figure 9:: shows in rear view the front wheel module of Figure 5 passing a pothole
- Figure 10:: shows a swing axle of the front wheel module of Figure 5 as a separate part;
- Figure 11:: shows the swing axle of Figure 10 connected to an axle stub;
- Figure 12:: shows a trailer provided with a front wheel module of Figure 5.

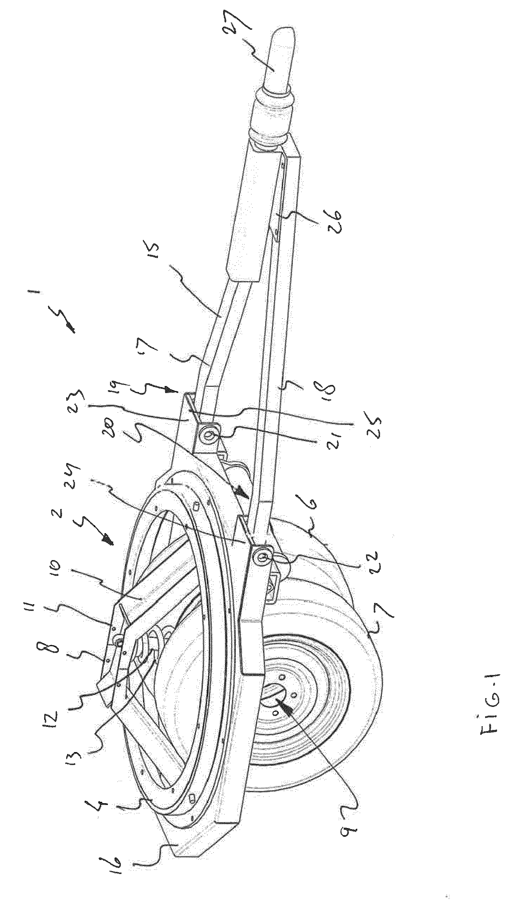

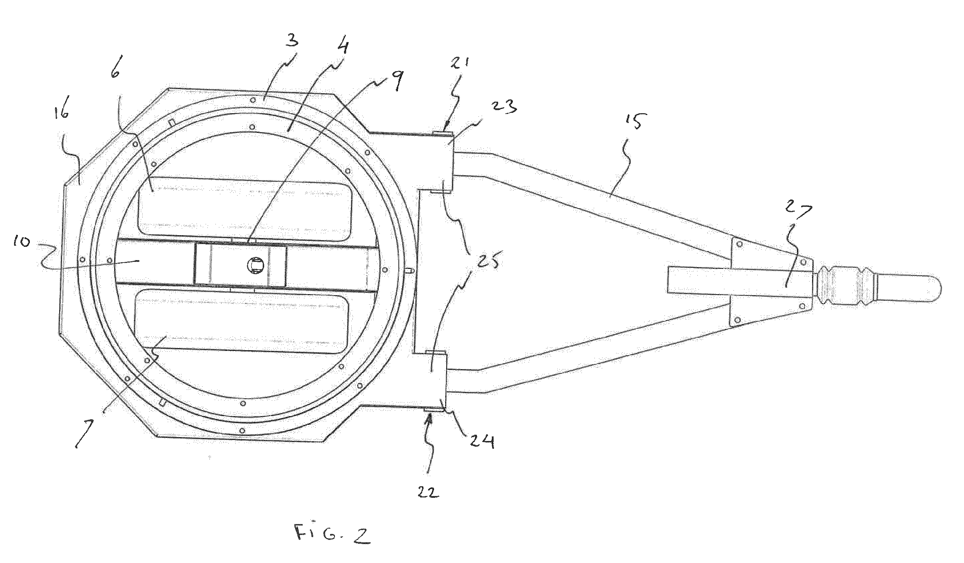

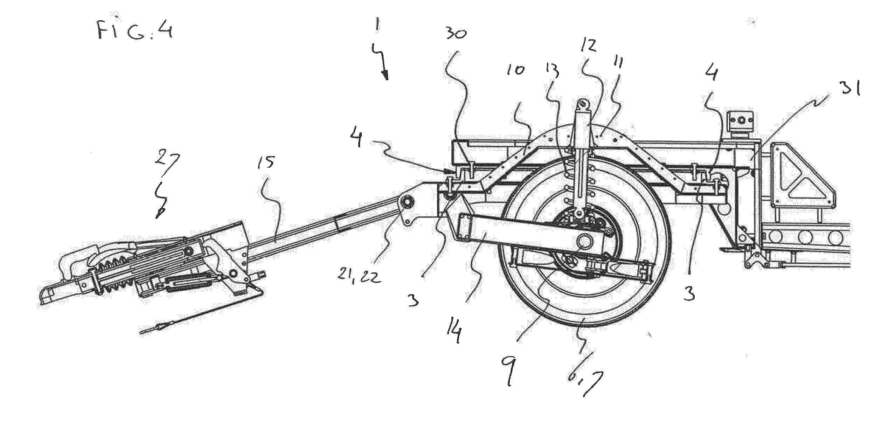

Figure 1 shows a front wheel module 1 which can be used to couple a trailer or caravan to an automotive vehicle such as a car. The front wheel module 1 comprises a swing bearing 2 with an inner bearing ring 3 (see Figures 2 and 4) and an outer bearing ring 4 which are concentrically spaced by bearing elements, such as conventional bearing rollers or bearing balls (not shown). The wheel module 1 comprises two parallel wheels 6, 7 which are suspended to a wheel suspension 8 and are rotatable about a wheel axle 9. The wheel suspension 8 comprises a support frame 10 directly connected to two opposite sides of the inner bearing ring 3 at a distance above the wheel axle 9. The support frame 10 extends in a direction substantially perpendicular to the wheel axle 9 and parallel to the wheels 6, 7. The support frame 10 spaces the two wheels 6, 7 which are symmetrically arranged relative to the swing bearing 2, having one wheel at both sides of the support frame. The two wheels 6, 7 are positioned within the inner circumference of the swing bearing 2, as is clear from Figure 2 showing the wheel module 1 in plan view.

The support frame 10 has a mid-section 11 offset at a distance above the level of the swing bearing. As a result the support frame 10 has an upwardly pointing V-shape creating space for positioning a shock absorber 12 with a compression spring 13 between the wheel axle 9 and the mid-section 11 of the support frame 10.

The wheel suspension 8 also comprises a suspension arm 14 (see Figure 4) connecting the wheel axle 9 to the support frame 10 and the inner bearing ring 3 of the swing bearing 2.

The inner bearing ring 3 of the swing bearing 2 is also rigidly connected to a drawbar 15 via a ring frame 16. The drawbar 15 comprises two legs 17, 18 with two outer ends 19, 20 at a distance from each other which are hinge connected to hinge axles 21, 22 held in extensions 23, 24 of the ring frame 16. The two legs 17, 18 of the drawbar 15 converge in a direction away from the wheel module 1 and come together at a point where they are joined by a top plate 26 carrying a trailer coupling 27. The trailer coupling 27, the drawbar legs 17, 18 and the ring frame 16 with the hinge connections of extensions 23, 24 are all symmetrically arranged relative to the swing bearing 2 and the wheels 6, 7 defining a longitudinal direction of the front wheel module 1 which is substantially parallel to the direction of the wheels 6, 7 and the driving direction when the front wheel module 1 after coupling to a trailer chassis is drawn by an automotive vehicle.

The outer bearing ring 4 comprises connection means 30, such as bolts, for connection to a trailer chassis 31.

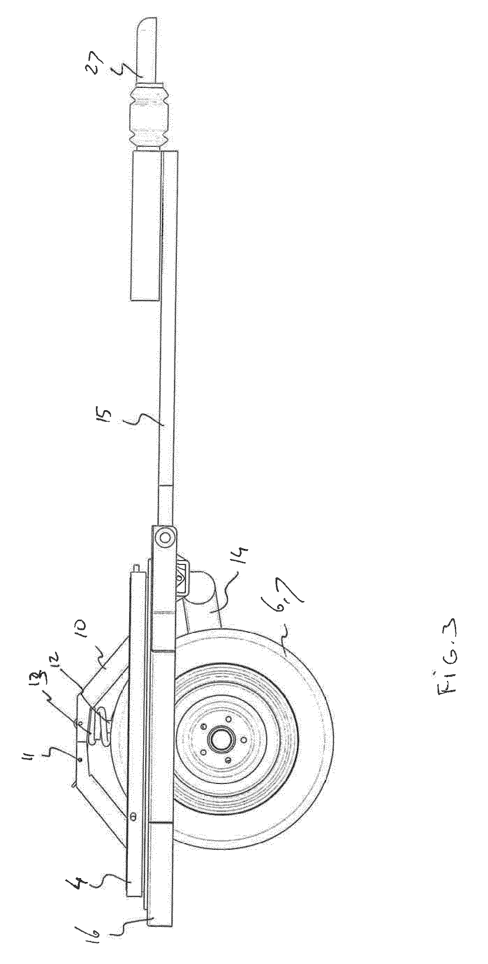

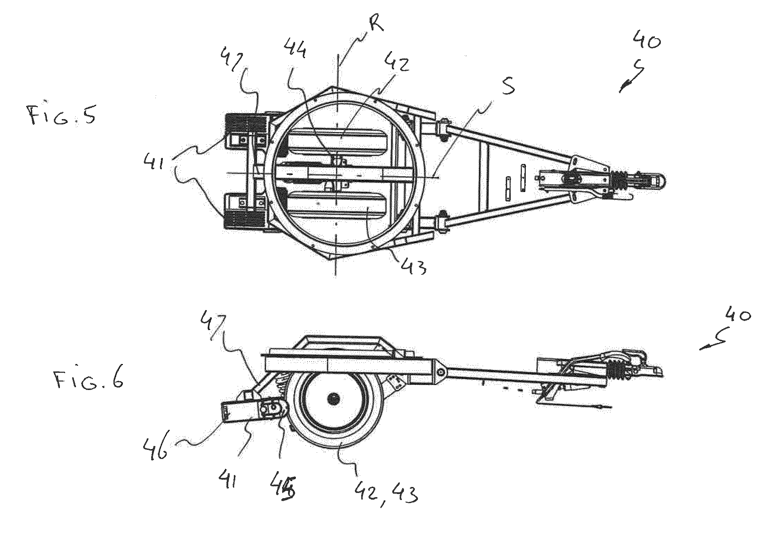

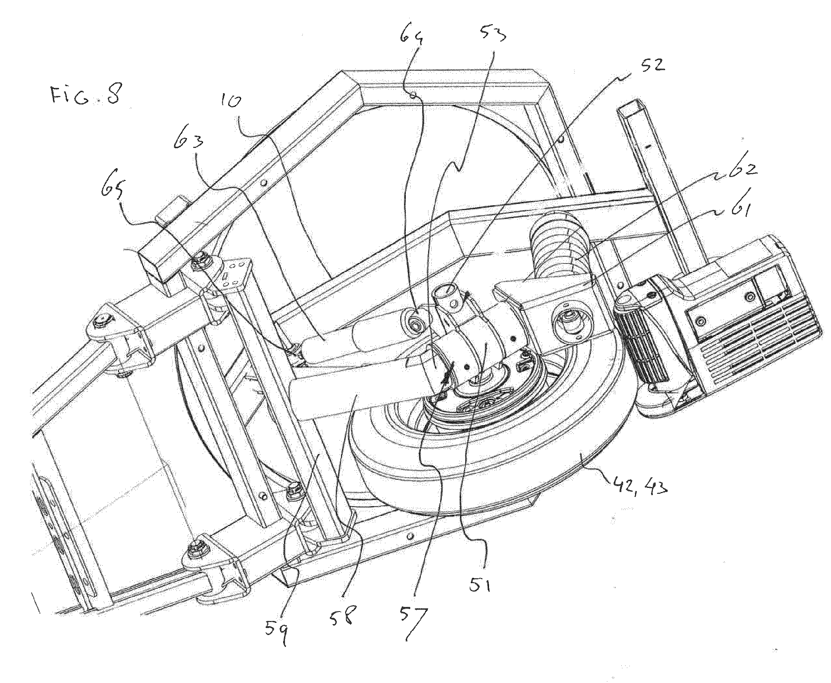

Figures 5 and 6 show a second embodiment of a front wheel module 40. This front wheel module 40 is similar to the one shown in Figures 1 - 4, but is provided with movers 41 for both wheels 42, 43 and a swing axle 44, shown in more detail in Figure 8. The swing axle 44 allows swing movement about a horizontal rotational axis S orthogonally crossing the rotational axis R of the wheels 42, 43.

The movers 41 comprise a driver roller 45 and an encased electromotor 46 for driving the roller 45. Both movers 41 are connected to a T-shaped pivotable arm 47, both ends of the T-shaped arm carrying a mover 41 in parallel arrangement. A first actuator (not shown) is configured to move the mover 41 horizontally or in any other suitable movement direction between a rest position at a distance from the associated wheel 42, 43, and a driving position, as shown in Figure 6. In the driving position the roller 45 engages the outer wheel surface. When the roller 45 is driven by the electromotor 46 it drives the associated wheel 42, 43 by friction. The electromotor 46 and the actuator can be controlled by means of a remote control (not shown). When a user wants to move the trailer or caravan he can activate the actuator to move the movers 41 from their rest position to their driving position. When the driver roller 45 engages the wheel surface, the electromotors 46 are activated to rotate the roller 45 and the wheels 42, 43. When the trailer or caravan carried by the front wheel module 40 is in the desired position, the user can stop the electromotor 46 and move the movers 41 into their rest positions. The movers 41 can be controlled independently, e.g., simultaneously with the same or different driving speeds or one of the movers 41 can stay in the rest position while the other one is activated to take a turn with the trailer or caravan.

Positioning movers on the wheels of a front wheel module according to the present invention provides a user improved control and maneuverability of his trailer or caravan.

In the shown embodiments the front wheel module 1, 40 comprises two wheels. Optionally, the module may comprise more wheels, typically an even number of symmetrically arranged wheels.

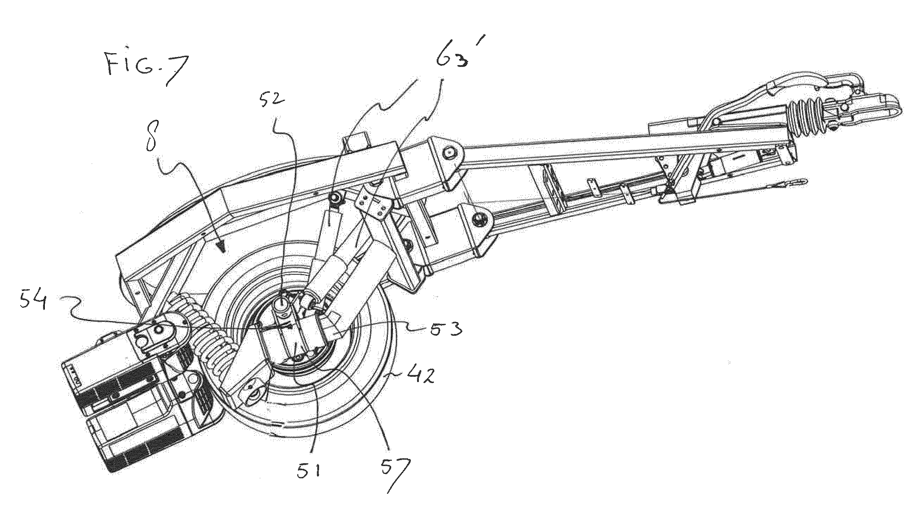

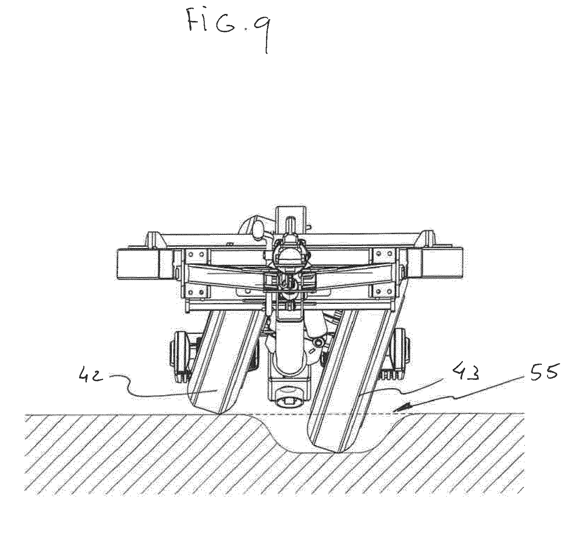

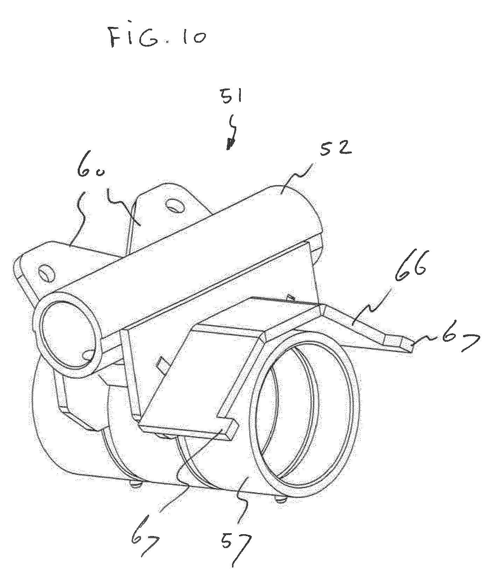

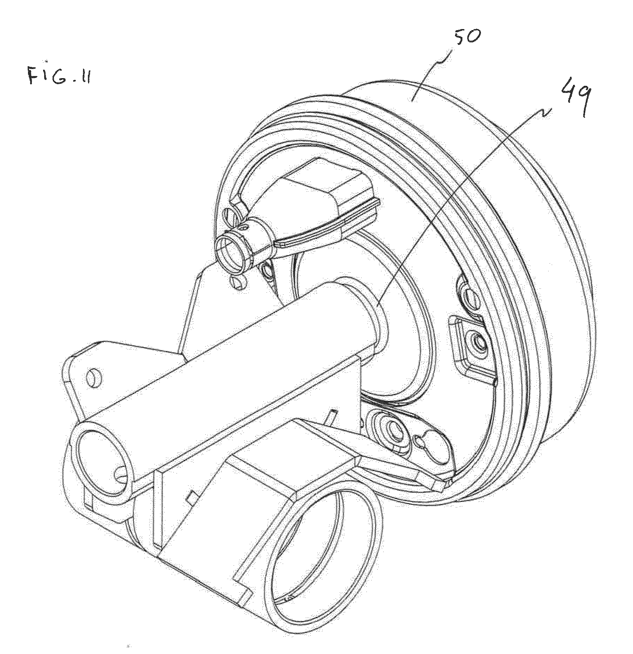

Figure 7 is a perspective bottom view with one of the wheels 42, 43 left away to provide a detailed view onto the wheel suspension 8. The wheel suspension 8 comprises a swing axle 51 supporting the wheels 42, 43. The swing axle 51 is shown separately in Figure 10. Figure 11 shows the swing axle attached to an axle stub 49 and a brake drum 50. The swing axle 51 comprises a wheel axle 52 and a swing bushing 57 rigidly connected to the wheel axle 52. In the drawings the swing axle 51 with the wheel axle 52 and the swing bushing 57 are shown as parts that are welded together, but alternatively the swing axle 51 can for example be a single piece, e.g., a single casting, comprising the axle 52 and the bushing 57. The wheel axle 52 extends perpendicularly to the longitudinal axis of the swing bushing 57 and is connected to axle stubs 49 of the wheels 42, 43. The swing bushing 57 receives a fixed support cylinder 53 in a manner enabling swing movement of the swing axle 51 and the wheels 42, 43 about the longitudinal axis of the fixed cylinder 53 (axis S in Figure 5). This contributes to a balanced redistribution of forces in case the tire pressures of the two wheels 42, 43 would not be not equal or in case of uneven support by the ground, e.g., if one of the wheels 42, 43 would pass a pothole in the road deck. Such a situation is shown in Figure 9. During passage of a pot hole 55 by one of the wheels 43, the swing axle 51 allows tilting of the two wheels 42, 43 so both wheels 42, 43 remain to be supported by the underground. The wheels 42, 43 are tilted and the load is distributed over the two wheels.

The fixed cylinder 53 has a front end 58 supported by a cross beam 59. At its ends the cross beam 59 is connected to the wheel suspension 8. The rear end 60 of the fixed cylinder 53 is connected to a shoe 61 forming the base of a shock absorber 62. The shock absorber comprises a damper in a spring extending between the shoe 61 and the support frame 10.

Optionally, one or more further dampers or shock absorbers can be used to damp swing movement by the swing axle. In Figure 8 a single damper 63 is used with a lower end 64 connected to the swing axle 51 and a top end 65 connected to the support frame 10. The top end 65 of the damper 63 is at another side of the fixed cylinder 53 than the lower end 64 of the damper 63. Hence, an inward stroke of the damper 61 damps rightward swinging of the wheels while an outward strike damps the leftward swinging. In such a case the damper's characteristics for inward strokes need to be substantially the same as the damper's characteristics for outward strokes. The embodiment of Figure 7 has two symmetrically arranged crossing dampers 63' of even size. In a further alternative embodiment, no dampers are used.

The swing axle 51 comprises flanges 60 connecting the dampers 63, 63' to the swing axle 51.

At one side of the wheel axle 52 the bushing 57 is capped by a roof shaped flange 66 with cams 67 at opposite ends defining the reach of the swing movement by the swing axle 51.

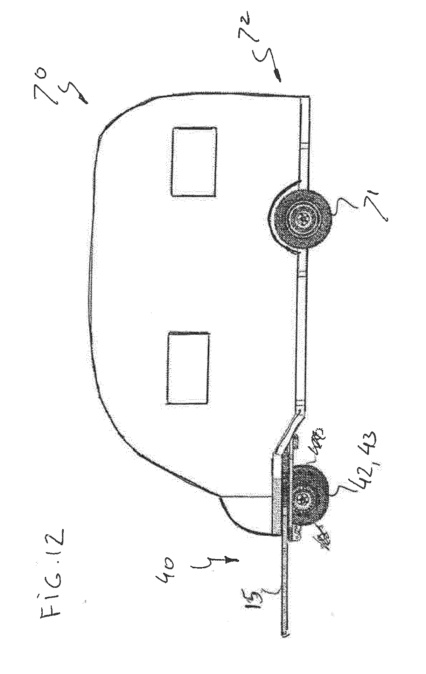

Figure 12 shows a caravan 70 comprising a front wheel module 40 with a drawbar 15. The caravan 70 further comprises two rear wheels 71, close to the rear end 72. The combination of the front wheel module and the rear wheels 71 at the rear end 72 provides improved stability combined with good maneuverability compared to the usual central wheel configuration of prior art caravans.

## Claims

1. Front wheel module (1) comprising:
- a swing bearing (2) with two concentric bearing rings (3, 4),
- a wheel suspension (8),
- at least one wheel (6, 7) rotatably suspended to the wheel suspension,
- and a drawbar (15),
wherein one of the two bearing rings is rigidly connected to the wheel suspension and to the drawbar, and wherein the other bearing ring comprises one or more couplings for connection to a trailer chassis, and wherein in plan view the centers of the one or more wheels (6, 7) are positioned within the inner circumference of the swing bearing.

2. Front wheel module according to claim 1 wherein the concentric bearing rings include an inner bearing ring (3) connected to the wheel suspension (8), and an outer bearing ring (4).

3. Front wheel module according to claim 1 or 2 wherein the level of the swing bearing (2) is between the wheel axis and the wheel top when the swing bearing is in a horizontal position.

4. Front wheel module according to any one of the preceding claims comprising two or more wheels (6, 7) jointly spanning a width which is less than the inner diameter of the swing bearing in plan view.

5. Front wheel module according to claim 4 wherein the wheel suspension comprises a support frame (10) bridging two opposite sides of one of the bearing rings at a distance above the wheel axle, wherein the support frame (10) extends in plan view in a direction substantially perpendicular to the wheel axle, spacing two wheels (6, 7) in a symmetrical arrangement.

6. Front wheel module according to claim 5, wherein the support frame has a mid-section (11) offset at a distance above the level of the swing bearing (2).

7. Front wheel module according to claim 5 or 6 comprising a shock absorber (12) between the wheel axle (9) and the mid-section of the support frame (10).

8. Front wheel module, optionally according to any one of the preceding claims, comprising a swing bearing, a wheel suspension connected to a bearing ring of the swing bearing, the wheel suspension comprising a swing axle (51) supporting two or more wheels such as to enable swing movement about a horizontal axis (S) orthogonal to the rotational axis (R) of the wheels (42, 43).

9. Front wheel module according to claim 10, the swing axle (51) comprising a wheel axle (52) and a swing bushing (57) receiving a fixed support cylinder (53) in a manner allowing said swing movement about the fixed support cylinder.

10. Front wheel module according to claim 8 or 9, comprising one or more dampers for damping swing movement by the swing axle.

11. Front wheel module, optionally according to any one of the preceding claims, comprising a swing bearing, a wheel suspension, one or more wheels (42, 43) rotatably suspended to the wheel suspension, and a mover (41) for each of the one or more wheels, the movers being movable between a rest position and an activating position where it engages the associated wheel.

12. Front wheel module according to claim 11 comprising two wheels, both provided with a mover (41), the movers being independently controllable by a control unit, e.g. by a remote control unit.

13. Trailer provided with a front wheel module according to any one of the preceding claims.

14. Trailer according to claim 13 wherein the trailer is a caravan.
